# EUROPÄISCHE PATENTANMELDUNG

(11) **EP 2 896 682 A1**
(43) Veröffentlichungstag der Anmeldung: **22.07.2015**
(21) Anmeldenummer: 14151687.2
(22) Anmeldetag: 17.01.2014
(51) Int. Cl.: C10L 1/14

(54) **Oxidationsstabilisierter Biodiesel**

(71) Anmelder: LANXESS Deutschland GmbH, 50569 Köln (DE); LANXESS Distribution GmbH, 51369 Leverkusen (DE)
(72) Erfinder: Podesta, Wolfgang Dr., 51381 Leverkusen (DE); Jordan, Hartwig Dr., 51467 Bergisch-Gladbach (DE); Ingendoh, Axel Dr., 51519 Odenthal (DE)
(74) Vertreter: Siegers, Britta

(57) **Zusammenfassung**

Die vorliegende Erfindung betrifft oxidationsstabilisierten Biodiesel und Verfahren zu dessen Herstellung.

## Beschreibung

Die vorliegende Erfindung betrifft oxidationsstabilisierten Biodiesel und Verfahren zu dessen Herstellung.

Biodiesel oder Fettsäureralkylester, insbesondere Fettsäuremethylester oder Fettsäureethylester, werden in zunehmendem Maße als Alternative zum herkömmlichen Dieselkraftstoff eingesetzt. Er hat sich als regenerativer und CO₂ neutraler Kraftstoff der ersten Generation etabliert.

Die Herstellung erfolgt überwiegend durch Umesterung von Pflanzenölen (Fettsäuretriglyceriden), wie beispielsweise Palmöl, Rapsöl, Sojaöl oder Sonnenblumenöl mit Methanol oder Ethanol zu Fettsäuremethyl- und -ethylestern durch Katalyse von Basen wie NaOH, KOH, Natrium- oder Kaliummethylat. Neben den reinen Fetten werden auch Mischungen derselben sowie Altfette und tierische Fette unterschiedlichster Herkunft und Zusammensetzung eingesetzt.

Diese Fette sind im Gegensatz zu Mineralölen stärkeren Alterungsprozessen unterlegen. Die erhöhte Oxidation sowie die Bildung freier Fettsäuren sind im Wesentlichen für diese Alterung verantwortlich. Daher hat sich der Einsatz von Antioxidantien mehr und mehr etabliert. So ist beispielsweise aus EP-A 1736528 der Einsatz von substituierten Alkylphenolen bekannt. Diese werden dem Biodiesel in Konzentrationen von 0,005 bis 0,5 Gew-% zugefügt.

Als Zusatz ist in diesem Zusammenhang vor allem Butylhydroxytoluol (BHT) bekannt. Dieses wird ebenfalls in Mengen von 0,005 bis 0,5 Gew.-% dem Biodiesel zugefügt. Des Weiteren ist der Einsatz der dimeren Verbindung 2,2'-Methylenbis(6-tert-butyl-4-methylphenol) beschrieben.

Handelsübliche Verbindungen sind z.B. von der Firma Lanxess Deutschland GmbH unter den Namen Baynox® oder Baynox®plus erhältlich. Diese Feststoffe werden vor der Applikation in Biodiesel, Petroleum oder Toluol gelöst.

Alternativ dazu sind auf dem Markt bereits die vorgenannten Wirkstoffe in gelöster Form erhältlich, wie z.B. Baynox®Solution (20% BHT in Biodiesel) bzw. Baynox® plus Solution 20% Baynox plus in Biodiesel) der Firma Lanxess Deutschland GmbH. Allerdings ist die Konzentration hierbei auf 20% Wirkstoff begrenzt und unterhalb von 10°C kann die Kristallisation bereits einsetzen, wodurch Rohrleitungen und empfindliche Messgeräte zugesetzt werden können. Höher konzentrierte Lösungen müssen beheizt werden, um eine Kristallisation auszuschließen.

In WO 2007/102948 werden bei Raumtemperatur stabile, höherkonzentrierte Lösungen, bestehend aus bis zu 40 Gew.-% des Antioxidans tert- Butylhydroquinon (TBHQ) beschrieben. Allerdings ist diese Substanz wassergefährdend und nur in einem vergleichsweise teuren Lösungsmittel Ethylenglycolmonobutylether löslich. Zudem sind diese Produkte nur unter Einsatz eines Co-Lösungsmittels herstellbar und haben eine relativ hohe Viskosität, die unerwünscht ist, da sie das Handhabbarkeit erschwert. Andere Flüssigformulierungen bestehen entweder aus Isomerenmischungen von verschiedenen Phenolen und weisen daher schwankende Produkteigenschaften auf, enthalten Phenylendiamine, welche die Lösung dunkelrot färben, oder haben andere Nachteile (niedriger Flammpunkt, hohes Wassergefährdungspotential, hohe Neigung zur Kristallisation, hohe Viskosität, etc.).

In der Literatur werden als geeignete Antioxidantien auch die substituierten Phenole 2,6-di-tert-Butylphenol, 2,4,6-tri-tert-Butyhphenol, beschrieben. Diese haben jedoch eine vergleichsweise geringe Wirksamkeit.

Die mono- und dialkylierten Hydrochinone, wie z.B. 2-tert-Butylhydrochinon (TBHQ) und 2,5-di-tert-Hydrochinon sind als besonders wirksame Antioxidantien insbesondere für mehrfach ungesättigte Fettsäuren, wie z.B. Sojaöl bekannt (WO 2009/108851). Diese Verbindungen sind allerdings schwer löslich und haben eine dunkle Farbe.

Aufgabe der vorliegende Erfindung war es daher, oxidationsstabilisierten Biodiesel und verbesserte Verfahren zu dessen Herstellung bereitzustellen, welche die Herstellung von Biodiesel mit hoher Antioxidans-Konzentration bei zugleich hoher Wirksamkeit bei niedriger Dosierung, bei gleichzeitig einfacher Handhabung ermöglichen. Die hierfür eingesetzte Mischung sollte idealerweise einen Flammpunkt >60°C haben und bei Temperaturen bis zu -5°C stabil bleiben. Des Weiteren sollte der damit hergestellte Biodiesel eine korrosionsinhibierende Wirkung haben und die eingesetzten Apparaturen (Tanks, Leitungen etc.) wie auch den Biodiesel selbst vor Oxidation schützen.

Überraschenderweise wurde festgestellt, dass oxidationstabilisierter Biodiesel durch die Zugabe von 0,005 bis 0,5 Gew-% einer Mischung aus:
A) 40-60 Gew.-% mindestens einem C₁-C₄-alkylierten Mono- und mindestens einem C₁ -C₄-alkylierten Bisphenol,
B) 0-5 Gew.-%, vorzugsweise 1-5 Gew.-% Chelatisierungsmittel und
C) 35 - 59 Gew% Lösemittel, ausgewählt aus der Gruppe der aprotischen Amide und/oder cyclischen Ketale
   wobei die Summe der Bestandteile der Mischung 100 Gew.% ergibt, hergestellt werden kann. Gleichzeitig werden aber auch die verwendeten metallhaltigen Apparate/Apparateteile (Kupfer, Messing oder Bronze) vor Korrosion geschützt.

Gegenstand der vorliegenden Erfindung ist daher ein Verfahren zur Herstellung von oxidationsstabilisiertem Biodiesel (Fettsäurealkylester), wonach 0,005 bis 0,5 Gew-% einer Mischung aus
A) 40-60 Gew.-%, vorzugsweise 45 - 55 Gew.% mindestens einem C₁-C₄-alkylierten Mono- und mindestens einem C₁-C₄-alkylierten Bisphenol,
B) 0-5 Gew.-%, bevozugt 1-5 Gew.-%, besonders bevorzugt 1,2 - 2,6 Gew.% Chelatisierungsmittel und
C) 35 - 59 Gew% Lösemittel, ausgewählt aus der Gruppe der aprotischen Amide und/oder cyclischen Ketale,
   wobei die Summe der Bestandteile A), B) und C) 100 Gew.% ergibt, dem Biodiesel zudosiert wird
   sowie der
   oxidationsstabilisierte Biodiesel (Fettsäurealkylester), enthaltend 0,005 bis 0,5 Gew-% einer Mischung aus
   A) 40-60 Gew.-%, vorzugsweise 45 - 55 Gew.% mindestens einem C₁-C₄-alkylierten Mono- und mindestens einem C₁-C₄-alkylierten Bisphenol,
   B) 0-5 Gew.-%, bevozugt 1-5 Gew.-%, besonders bevorzugt 1,2 - 2,6 Gew.% Chelatisierungsmittel und
   C) 35 - 59 Gew% Lösemittel, ausgewählt aus der Gruppe der aprotischen Amide und/oder cyclischen Ketale,
      wobei die Summe der Bestandteile A), B) und C) 100 Gew.% ergibt.

Ein weiterer Gegenstand der Erfindung sind Zusammensetzungen, enthaltend
A) 40-60 Gew.-%, vorzugsweise 45 - 55 Gew.% mindestens einem C₁-C₄-alkylierten Mono- und mindestens einem C₁-C₄-alkylierten Bisphenol,
B) 0-5 Gew.-%, bevozugt 1-5 Gew.-%, besonders bevorzugt 1,2 - 2,6 Gew.% Chelatisierungsmittel und
C) 35 - 59 Gew% Lösemittel, ausgewählt aus der Gruppe der aprotischen Amide und/oder cyclischen Ketale.

Bei Biodiesel im Sinne der Erfindung handelt es sich um Fettsäuremethylester (FAME) und/oder ein Fettsäureethylester (FAEE). Auch Mischungen aus FAME oder FAEE sind möglich. Dieser Begriff umfasst die durch Umesterung von Pflanzenölen (Fettsäureglyceriden), wie beispielsweise Palmölen, Rapsöl, Sojaöl oder Sonnenblumenöl, und/oder Altfetten und/oder tierischen Fetten, mit Methanol oder Ethanol zu Fettsäuremethyl- bzw. -ethylestern durch Katalyse von Basen, wie NaOH, KOH, Natrium- oder Kaliummethylat entstandenen Ester.

Bei der Kombination aus mindestens einem C₁-C₄-alkylierten Mono- und mindestens einem C₁-C₄-alkylierten Bisphenol im Sinne der Erfindung handelt es sich vorzugsweise um eine Mischung enthaltend 2,6-Di-tert.butyl-4-methylphenol (BHT) und 2,2'-Methylenbis(6-tert-butyl-4-methylphenol).

Bei dem Chelatisierungsmittel im Sinne der Erfindung handelt es sich vorzugsweise um aromatische Triazole. Diese weisen vorzugsweise in wäßriger Lösung einen pH-Wert > 6 auf.

In einer besonders bevorzugten Ausführungsform der vorliegenden Erfindung wird Chelatisierungsmittel Benzotriazol oder Tolyltriazol eingesetzt.

Als Lösemittel im Sinne der Erfindung werden vorzugsweise solche mit einem Flammpunkt > 60 °C, bevorzugt > 70°C und solche mit einem Schmelzpunkt < -10 °C, bevorzugt -20°C eingesetzt.

In einer besonders bevorzugten Ausführungsform der Erfindung werden als Lösemittel aprotische Amide und/oder cyclischen Ketale eingesetzt.

Dabei sind als aprotische Amide N,N-Dimethylformamide, N,N-Dimethylacetamide und /oder N-Methylpyrrolidon besonders bevorzugt.

Dabei sind als cyclische Ketale die Umsetzungsprodukte aus Glycerin mit mindestens einem C₁- bis C₆-Aldehyd und/oder die Umsetzungsprodukte aus Glycerin mit mindestens einem C₃- bis C₆- Keton bevorzugt, wobei Isopropylidenglycerin besonders bevorzugt ist.

In einer weiteren bevorzugten Ausführungsform der vorliegenden Erfindung beträgt das Verhältnis von C₁-C₄-alkylierten Mono- zu C₁-C₄-alkylierten Bisphenolen, vorzugsweise 2,6-Di-tert.butyl-4-methylphenol (BHT) zu 2,2'-Methylenbis(6-tert-Butyl-4-methylphenol), 1: 10 bis 5: 1, besonders bevorzugt 1: 3 bis 2: 1.

In einer anderen bevorzugten Ausführungsform der vorliegenden Erfindung enthalten die 40-60 Gew.-% aus A) zusätzlich 1-9 Gew%, besonders bevorzugt 3-8 Gew% tert-Butylhydroquinon.

Die vorliegende Erfindung betrifft ebenfalls ein Verfahren zur Herstellung der Mischung der Bestandteile A), B) und C) sowie ein Verfahren zur Herstellung der Zusammensetzung, enthaltend die Bestandteile A), B) und C), wonach zunächst das Lösemittel C) vorgelegt, auf mindestens 40°C erhitzt und anschließend die Bestandteile A) und gegebenenfalls B) vorzugsweise unter Rühren zudosiert werden, und anschließend weitergerührt werden, bis eine klare Lösung entsteht.

Als Mischaggregate sind prinzipiell alle bekannten Rührorgane, vorzugsweise axiale, radiale oder tangentiale Rührorgane, wie beschrieben in Wilke et al., Rührtechnik Verfahrenstechnische und apparative Grundlagen. Dr. Alfred Hüthig Verlag Heidelberg, 2. Auflage, 1991, Seiten 92 bis 97, geeignet.

Gegenstand der vorliegenden Erfindung ist zudem die Verwendung des nach dem erfindungsgemäßen Verfahren stabilisiertem Biodiesels als Kraftstoff sowie der oxidationsstabilisierte Biodiesel, enthaltend die Bestandteile A), B) und C) in einem Anteil von 0,005 bis 0,5 Gew-%. Dieser oxidationsstabilisierte Biodiesel wird vorzugsweise durch Einrühren von 0,005 bis 0,5 Gew-% der Mischung enthaltend die Bestandteile A), B) und C) hergestellt. Als Mischaggregate sind prinzipiell alle bekannten Rührorgane, vorzugsweise axiale, radiale oder tangentiale Rührorgane, wie beschrieben in Wilke et al., Rührtechnik Verfahrenstechnische und apparative Grundlagen. Dr. Alfred Hüthig Verlag Heidelberg, 2. Auflage, 1991, Seiten 92 bis 97, geeignet.

In Bezug auf die anderen Parameter wird auf die obigen Ausführungen zu dem erfindungsgemäßen Verfahren verwiesen.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die folgenden Beispielen sollen die Erfindung erläutern, ohne sie jedoch in ihrem Umfang zu beschränken.

### Ausführungsbeispiele:

Dabei wurden folgende Verbindungen eingesetzt, :
A) 20 Gew. % 2,6-Di-tert.butyl-4-methylphenol (BHT) eingerührt in Biodiesel
B) 20 Gew. % 2,2'-Methylenbis(6-tert-butyl-4-methylphenol) eingerührt in Biodiesel
C) Mischung aus 53 % Dimethylcetamid, 45 Gew.% einer Mischung aus 2,6-Di-tert.butyl-4-methylphenol und 2,2'-Methylenbis(6-tert-butyl-4-methylphenol) im Verhältnis 1:1 und 2% Tolyltriazol.
   Diese wurde hergestellt über folgende Schritte: das Lösemittel Dimethylcetamid wird vorgelegt, auf mindestens 40°C erhitzt und anschließend wurden 2,6-Di-tert.butyl-4-methylphenol und 2,2'-Methylenbis(6-tert-butyl-4-methylphenol) mit dem Tolyltriazol unter Rühren zudosiert und weitergerührt, bis eine klare Lösung entstand.
D) 20 Gew.% tert-Butylhydroquinon, 30 Gew.% 3,5-Di-tert.butyl-4-hydroxyphenyl-C7-C9-verzweigte Alkylpropionate erhältlich von der BASF SE unter dem Handelsnamen Irganox®1135 in 50 Gew% Ethylenglykolmonobutylether, erhalten durch Zusammenrühren der Einzelbestandteile.
E) Mischung aus 53 % Dimethylcetamid, 45 Gew.% einer Mischung aus 2,6-Di-tert.butyl-4-methylphenol und 2,2'-Methylenbis(6-tert-butyl-4-methylphenol) im Verhältnis 1:1, erhalten durch Zusammenrühren der Einzelbestandteile.

Der Korrosionstest wurde wie folgt durchgeführt:
Jeweils 100 ml Rapsmethylester stabilisiert mit 500 ppm der Mischungen A) bis E) wurden in einem Stahlzylinder bei einer Temperatur von 40°C 60 Tage lang offen gelagert. Die Ergebnisse der visuellen Prüfung sind in der nachstehenden Tabelle angegeben.

Dabei wurden die nachstehend genannten Parameter wie folgt bestimmt :

| Produkt/ Eigenschaften | A) Vergleich | B) Vergleich | C) Erfindungsgemäß | D) Vergleich | E) Erfindungsgemäß |
|---|---|---|---|---|---|
| Aussehen | Gelbe Flüssigkeit | Gelbe Flüssigkeit | Gelbe Flüssigkeit | Bernsteingelbe Flüssigkeit | Gelbe Flüssigkeit |
| Viskosität [mPa.s] | 8 | 14 | 10 | 145 | 10 |
| Kristallisation bei - 5 °C | Ja | Ja | Nein | Nein | Nein |
| Flammpunkt | 147°C | 172°C | 70 °C | 147°C | 70 °C |
| Rancimat nach DIN 14114 in Rapsmethylester bei 500 ppm Mischungsanteil | Niedrig | Mittel | Hoch | Hoch | Hoch |
| Korrosion | Ja | Ja | Nicht bestimmt | Ja | Nein |

Wie aus der Tabelle ersichtlich, zeigen die nach dem erfindungsgemäßen Verfahren hergestellten Mischungen einen hohen Rancimat-Wert bei gleichzeitig niedriger Viskosität und keiner ersichtlichen Korrosion

## Patentansprüche

1. Verfahren zur Herstellung von oxidationsstabilisiertem Biodiesel, **dadurch gekennzeichnet, dass** 0,005 bis 0,5 Gew-% einer Mischung aus
A) 40-60 Gew.-% einer Mischung aus mindestens einem C₁-C₄-alkylierten Mono- und mindestens einem C₁-C₄-alkylierten Bisphenol,
B) 0-5 Gew.-%, vorzugsweise 1-5 Gew.% Chelatisierungsmittel und
C) 35 - 59 Gew.% Lösemittel ausgewählt aus der Gruppe der aprotischen Amide und/oder cyclischen Ketale,
wobei die Summe der Bestandteile A), B) und C) 100 Gew.% ergibt, dem Biodiesel zudosiert wird.

2. Verfahren nach Anspruch 1, **dadurch gekennzeichnet, dass** als Mischung aus mindestens einem C₁-C₄-alkylierten Mono- und mindestens einem C₁-C₄-alkylierten Bisphenol eine Mischung enthaltend 2,6-Di-tert.butyl-4-methylphenol (BHT) und 2,2'-Methylenbis(6-tert-butyl-4-methylphenol) eingesetzt wird.

3. Verfahren nach Anspruch 1 oder 2, **dadurch gekennzeichnet, dass** als Chelatisierungsmittel aromatische Triazole eingesetzt werden.

4. Verfahren nach Anspruch 3, **dadurch gekennzeichnet, dass** als Chelatisierungsmittel Triazole, die in wäßriger Lösung einen pH-Wert > 6 aufweisen, eingesetzt werden.

5. Verfahren nach einem der Ansprüche 3 bis 5, **dadurch gekennzeichnet, dass** als Chelatisierungsmittel Benzotriazol oder Tolyltriazol eingesetzt werden.

6. Verfahren nach einem der Ansprüche 1 bis 5, **dadurch gekennzeichnet, dass** als organisches Lösemittel mindestens ein aprotisches Amid eingesetzt wird.

7. Verfahren nach Anspruch 6, **dadurch gekennzeichnet, dass** als aprotische Amide N,N-Dimethylformamide, N,N-Dimethylacetamide und /oder N-Methylpyrrolidon eingesetzt werden.

8. Verfahren nach Anspruch 6, **dadurch gekennzeichnet, dass** als cyclische Ketale die Umsetzungsprodukte aus Glycerin mit mindestens einem C₁- bis C₆-Aldehyd und/oder die Umsetzungsprodukte aus Glycerin mit mindestens einem C₃- bis C₆-Keton eingesetzt werden.

9. Verfahren nach Anspruch 8, **dadurch gekennzeichnet, dass** als cyclisches Ketal Isopropylidenglycerin eingesetzt wird.

10. Verfahren nach Anspruch 2, **dadurch gekennzeichnet, dass** in der Mischung das Verhältnis von C₁-C₄-alkylierten Mono- zu C₁-C₄-alkylierten Bisphenolen, vorzugsweise 2,6-Di-tert.butyl-4-methylphenol (BHT) zu 2,2'-Methylenbis(6-tert-butyl-4-methylphenol), 1: 10 bis 5: 1 beträgt.

11. Verfahren nach einem der Ansprüche 1 bis 10, **dadurch gekennzeichnet, dass** in den 40-60 Gew.-% von A) zusätzlich 1-9 Gew% tert- Butylhydroquinon enthalten sind.

12. Verfahren nach einem der Ansprüche 1 bis 11, **dadurch gekennzeichnet, dass** der stabilisierte Biodiesel anschließend als Kraftstoff eingesetzt wird.

13. Biodiesel, enthaltend 0,005 bis 0,5 Gew-% einer Mischung aus
A) 40-60 Gew.-% einer Mischung aus mindestens einem C₁-C₄-alkylierten Mono- und mindestens einem C₁-C₄-alkylierten Bisphenol,
B) 0-5 Gew.-%, vorzugsweise 1-5 Gew.% Chelatisierungsmittel und
C) 35 - 59 Gew.% Lösemittel ausgewählt aus der Gruppe der aprotischen Amide und/oder cyclischen Ketale,
wobei die Summe der Bestandteile A), B) und C) 100 Gew.% ergibt.

14. Zusammensetzung enthaltend
A) 40-60 Gew.-% einer Mischung aus mindestens einem C1-C₄-alkylierten Mono- und mindestens einem C1-C₄-alkylierten Bisphenol,
B) 0-5 Gew.-%, vorzugsweise 1-5 Gew.% Chelatisierungsmittel und
C) 35 - 59 Gew.% Lösemittel, ausgewählt aus der Gruppe der aprotischen Amide und/oder cyclischen Ketale.
